# EUROPÄISCHE PATENTSCHRIFT

(11) **EP 2 123 576 B1**
(45) Veröffentlichungstag und Bekanntmachung des Hinweises auf die Patenterteilung: **23.11.2011**
(21) Anmeldenummer: 09010574.3
(22) Anmeldetag: 20.05.2005
(51) Int. Cl.: B65G 7/00, B62B 5/00, B61B 3/02, B62D 55/08, B65G 23/16

(54) **Antriebseinheit mit einem angetriebenen Rollenelement**
Driving unit with a driven rollers assembly
Unité d'entraînement avec un élément à rouleaux entraîné

(30) Priorität: 21.05.2004 CH 8852004
(43) Veröffentlichungstag der Anmeldung: 25.11.2009
(62) Teilanmeldung aus: 05740398.2
(73) Patentinhaber: WRH Walter Reist Holding AG, 8272 Ermatingen (CH)
(72) Erfinder: Reist, Walter, 8340 Hinwil (CH)
(74) Vertreter: Frei Patent Attorneys

(56) Entgegenhaltungen:
- DE-A1- 19 534 647
- GB-A- 403 082
- US-A- 3 200 770
- US-A- 3 399 578

## Beschreibung

Die Erfindung liegt im Gebiet der Fördertechnik und bezieht sich auf eine gemäss dem Oberbegriff des Patentanspruches 1. Eine Antriebseinheit solche Antriebseinheit ist aus der US 3,200,770 bekannt.

Davon abgeleitete Ausführungsformen sind in den entsprechenden abhängigen Patentansprüchen definiert.

In der Fördertechnik stellt sich unter anderem das Problem, dass Lasten mit möglichst geringem Kraftaufwand und unter geringer Reibung bewegt werden sollen. Dabei soll die Konstruktion von Fördermitteln möglichst einfach sein. Zum Erreichen einer linearen, rotatorischen oder sonstigen geführten Bewegung zwischen Körpern werden Räder eingesetzt, die an einem ersten Körper befestigt sind und auf einem zweiten Körper rollen. Bei hohen Belastungen wird die Anzahl Räder erhöht. Das Problem der Reibungsminimierung bleibt aber bestehen und ist nun auf die Lagerung der Räder verschoben.

In der GB 403 082 aus dem Jahre 1932 wird eine Einrichtung zum Einsatz in Laufkatzen und Fahrgestellen gezeigt, bei welcher mehrere jeweils axial verbundene Paare von Schienenrädern um ein Paar von ovalen Schienen umlaufen. Dabei sind die Ebenen der beiden Schienenovale parallel zueinander. Die Achsen aufeinanderfolgender Radpaare sind durch Verbindungsglieder oder -Federn aneinander gekoppelt. Jedes Radpaar läuft einerseits auf den genannten ovalen Schienen, und andererseits auf einer ortsfesten Schienenpaar oder auf den Kanten eines 1-Trägers. Die beschriebene Konstruktion ist entsprechend dem Anwendungsbereich auf hohe Lasten ausgelegt, was zur gezeigten Wahl von Schienen und Schienenrädern führt. Zum Antrieb der Anordnung ist ein zusätzliches Zahnrad, das in einer stationären Zahnstange eingreift, vorgesehen. Es ist dadurch eine zusätzliche mechanische Kopplung zwischen der beweglichen und der stationären Vorrichtung vonnöten.

Ferner zeigt die GB 387 403 Raupenketten für schwere Fahrzeuge wie fahrbare Geschütze. Die Raupenketten sind auf einzelnen Abschnitten ihrer Umlaufbahn auf mitlaufenden Rollen abgestützt. Die Rollen sind über ihre Achsen aneinander gekoppelt und laufen um einen Mittenkörper um. Zur Fortbewegung des Fahrzeugs werden die Raupenketten, in einem Bereich, in welchem sie nicht entlang den Rollen laufen, durch ein Treibrad angetrieben.

Die genannten Vorrichtungen aus der Fahrzeugtechnik können, da sie auf andere Anforderungen, insbesondere auf - absolut gesehen - hohe Lasten und grössere Dimensionen hin ausgelegt sind, nicht in effizienter Art in der Fördertechnik eingesetzt werden. Der Antrieb bedingt zusätzliche Mittel (Zahnrad und Zahnstange respektive von den Rollen separierte Raupenketten mit zusätzlichen Lagerungen), welche die Konstruktion verkomplizieren.

US 534,442 zeigt eine Antriebs und Lagereinheit für Fahrzeuge, in welcher Kugeln durch eine endlos umlaufende Bahn gefördert werden. Die Gesamtheit der Kugeln rollt also auf einer nicht kreisförmigen Umlaufbahn um einen Zentralkörper und ist an einer Aussenseite an einer Seite des Zentralkörpers zum Abrollen an einer Schiene vorgesehen, wobei die Einheit ein Zahnrad aufweist, welches an den Rollen eingreift und diese bezüglich des Zentralkörpers antreibt.

US 5,186,270 offenbart ein omnidirektional verfahrbares Chassis, welches über Kugeln am Boden abrollt. Die Kugeln sind einzeln gelagert und können in alle Richtungen gedreht und angetrieben werden.

US 2,734,476 beschreibt eine Art Raupenantrieb mit einer umlaufenden und angetriebenen Raupe, welche über Lagerrollen abrollt. Die Lagerrollen laufen um einen Zentralkörper. Jeweils zwei aufeinanderfolgende Lagerrollen sind durch Seile oder Bänder verbunden, welche um diese zwei Lagerrollen laufen.

US 4,191,431 zeigt ebenfalls einen Raupenantrieb, bei welchem einzelne Plattenelemente aneinander gehängt sind und auf Rollen gelagert umlaufen. Der Antrieb ist federnd montiert, um Stösse aufzufangen.

Es ist deshalb Aufgabe der Erfindung, eine Antriebseinkeit zu schaffen, welches zum Einsatz in der Fördertechnik geeignet ist. Insbesondere soll es konstruktiv einfach gestaltet sein. Dabei soll es absolut gesehen kleinere, aber bezüglich den Materialien und den Dimensionen des Elements betrachtet, hohe Belastungen ertragen.

Eine erfindungsgemässe Antriebseinkeit weistein angetriebenes Rollenelement auf, wobei das Rollenelement einen Zentratkörper sowie einen Rollenkörper und einem starren Gegenkörper aufweist. Der Rollenkörper ist auf einer nicht kreisförmigen Umlaufbahn um den Zentralkörper verlaufend und bezüglich des Zentralkörpers durch Abrollen von Rollen des Rollenkörpers an einer Innenseite des Rollenkörpers am Zentralkörper bewegbar angeordnet. Die Rollen sind an einer Aussenseite des Rollenkörpers zum Abrollen am Gegenkörper vorgesehen. Das Rollenelement weist Antriebsmittel auf, welche am Rollenkörper eingreifen und diesen bezüglich des Zentralkörpers antreiben. Der Rollenkörper und der Gegenkörper weisen zueinander korrespondierend geformte und ineinandergreifende Mittel zur formschlüssigen Kraftübertragung auf.

Durch das Eingreifen der Antriebsmittel am Rollenkörper wird der Rollenkörper direkt angetrieben und auf der Umlaufbahn um den Zentralkörper herum gezogen oder gestossen. Zumindest an denjenigen Stellen, an welchen der Zentralkörper die Rollen bezüglich des Gegenkörpers belastet, rollen die Rollen am Zentralkörper ab und treiben dadurch auf ihrer anderen Seite das Rollenelement als ganzes bezüglich des Gegenkörpers vorwärts.

Durch den direkten Antrieb des Rollenkörpers ist ein Antrieb ohne weitere mechanische Kopplungen mit dem Gegenkörper möglich. Die Konstruktion ist einfach und robust und kann auch mit relativ lose oder locker verbundenen Teilen realisiert werden.

Ein Antreiben der Rollen durch Rotation der Rollen ist grundsätzlich auch möglich, jedoch technisch schwierig zu realisieren. Vorzugsweise wird deshalb der Rollenkörper als ganzes bezüglich des Zentralkörpers durch Nocken oder Zähne angetrieben, welche an den Rollen und/oder an anderen Teilen des Rollenkörpers angreifen. Der Antrieb weist also vorstehende Elemente auf, die zum Eingriff an korrespondierenden Elementen des Rollenkörpers und damit zum Antrieb des Rollenkörpers bezüglich des Zentralkörpers ausgebildet sind.

Beim Angreifen an den Rollen greifen die vorstehenden Antriebselemente beispielsweise zwischen walzenförmigen und voneinander beabstandeten Rollen ein, ähnlich wie bei einer Rollenkette. Oder aber die Rollen sind näher zueinander angeordnet, und sind jeweils mit einer in Umlaufrichtung verlaufenden Nut versehen und dadurch zur Aufnahme der vorstehenden Antriebselemente ausgebildet.

Beim Angreifen an anderen Teilen des Rollenkörpers sind solche anderen Teile vorzugsweise Mitnehmerelemente der Lagerachsen, die in axialer Richtung hervorstehend und zu den Nocken korrespondierend gestaltet sind. Falls die Lagerachsen durch Kettengliedplatten verbunden sind, können die Mitnehmerelemente auch an diesen Kettengliedplatten ausgebildet sein.

In einer bevorzugten Ausführungsform der Erfindung wird der Antrieb durch mindestens ein innerhalb des Rollenkörpers angeordnetes Zahnrad gebildet Dessen Zähne greifen vorzugsweise in den Zwischenraum zwischen den Rollen respektive in die Nuten der Rollen ein.

In einer bevorzugten Ausführungsform der Erfindung wird der Antrieb durch eine Kette von Antriebsnocken gebildet, welche von innen her oder von aussen her in den Rollenkörper eingreifen und diesen antreiben. Vorzugsweise sind dabei die Antriebsnocken zeitweise nicht mit dem Rollenkörper in Eingriff und werden durch eine Steuerkurve gesteuert in einem vorgegebenen Bereich bezüglich des Zentralkörpers mit dem Rollenkörper vorübergehend in Eingriff gebracht.

Die Rollen sind vorzugsweise als Kugeln oder im wesentlichen walzenförmig ausgestaltet. Durch die einfache Form der Rollen können das Rollenelement und der Gegenkörper in mechanisch einfacher Weise ausgeführt werden Die Rollen können mit einfachen Mitteln, beispielsweise in einer umlaufenden Nut im Zentralkörper, zuverlässig geführt werden. Dies kann mit relativ hohen Toleranzen, also mit lose verbundenen Elementen geschehen. Durch eine Walzenform oder Tonnenform, also eine im wesentlichen zylindrische Form oder eine ausgebauchte Zylinderform oder eine eingebuchtete Zylinderform, wird eine Auflagekraft auf eine Kontaktlinie zwischen der Walze und dem Gegenkörper verteilt. Durch die nicht kreisförmige Umlaufbahn kann die Form des Zentralkörpers und damit der Umlaufbahn an eine Form des Gegenkörpers angepasst werden, und somit eine Auflagekraft über mehrere Rollen verteilt werden. Durch die Walzenform ist gleichzeitig eine einfache Führung des Rollenkörpers in beispielsweise einer Schiene möglich.

Vorzugsweise weist der Rollenkörper Mittel zur Erzielung eines gleichbleibenden Abstandes zwischen den Rollen auf. Dadurch wird verhindert, dass aufeinanderfolgende Rollen sich gegenseitig berühren, wodurch Reibungsverluste entstehen könnten. Die Mittel können beispielsweise realisiert werden, indem die Rollen ähnlich wie in einer Rollenkette kettenartig miteinander verbunden sind. Im Gegensatz zu einer Rollenkette stehen jedoch die Rollen entsprechend der Erfindung über die Verbindungsglieder der Kette hervor, und befindet sich zwischen den Rollen nicht zwingend ein Zwischenraum, wie er bei einer Rollenkette zur Aufnahme von Zähnen eines Zahnrads unbedingt notwendig ist.

In einer bevorzugten Ausführungsform der Erfindung ist das Mittel zur Erzielung eines gleichbleibenden Abstandes zwischen den Rollen mindestens ein flexibles Lagerband, welches Lagerachsen der Rollen miteinander verbindet. Dadurch wird die Konstruktion des Rollenkörpers, verglichen mit einer kettenartigen Verbindung der Rollen, vereinfacht. Es können vorzugsweise zwei Lagerbänder mit dazwischen liegenden Rollen, oder ein Lagerband zwischen zwei Reihen von Rollen eingesetzt werden. Grundsätzlich sind auch Anordnungen mit mehreren Reihen von in Achsrichtung alternierenden Rollen und Rollenbändern, und/oder asymmetrische Anordnungen möglich. Das Lagerband kann mindestens auf der Innenseite als Zahnriemen ausgebildet sein, welcher in eine korrespondierend gestaltete Verzahnung eines Zahnrades eingreift

In einer anderen bevorzugten Ausführungsform der Erfindung sind Drehachsen der Rollen in seitlich der Rollen angeordneten Distanzierungskärpern drehbar gelagert. Die Distanzierungskörper oder Distanzhalter sind vorzugsweise hart und steif, das heisst, im wesentlichen nicht flexibel und sind lose eingelegt und nicht miteinander verkettet. In Laufbahnrichtung sind die Distanzierungskörper weiter ausgedehnt als die Rollen. Es ist also jeder Rolle ein Paar von Distanzierungskörpern zugeordnet, welche durch die Rollenachse mit der Rolle drehbar verbunden sind, mit der Rolle mitlaufen, und welche die Rollen voneinander fernhalten. Es ist damit nur ein Schieben aber kein Ziehen einer Folge von Rollen möglich.

Damit wird also ein minimaler Abstand zwischen den Rollen gewährleistet, so dass sich die Rollen nicht berühren. Ein maximaler Abstand wird durch die Distanzierungskörper selber nicht gewährleistet. Nur in Kombination mit allen anderen Rollen des Rollenkörpers und durch die Begrenzung mittels einer Förderbahn, in welcher die Rollen laufen, wird auch ein maximaler Abstand gewährleistet.

Die Distanzierungskörper laufen zusammen mit den Rollen in einer Förderbahn um den Zentralkörper herum. Die Förderbahn umschliesst die Distanzierungskörper teilweise, so dass sie nicht in radialer Richtung herausfallen können. Die Distanzierungskörper können beiderseits einer Rolle drehbar auf hervorstehenden, fest mit der Rolle verbundenen kurzen Achszapfen aufgesteckt sein, oder die Distanzierungskörper können fest mit einer Achse der Rollen verbunden sein, um welche Achse die Rolle drehbar angeordnet ist.

Zwischen den Distanzierungskörpern und den Rollen, sowie zwischen den Distanzierungskörpern und der Förderbahn liegt vorzugsweise ein signifikantes Spiel vor. Die Teile sind dadurch leicht gegeneinander bewegbar, und sie können kostengünstig gefertigt und einfach montiert werden.

Im Prinzip können die Rollenkörper auch durch aussenliegende Lagerschalen geführt und voneinander beabstandet werden. Diese sind aus einer Konstruktion von gelenkig oder flexibel miteinander verbundenen einzelnen Lagerschalen gebildet und bilden einen beweglichen Lagerkäfig, im Folgenden auch Käfigband genannt. Dabei ist das Käfigband in einer bevorzugten Ausführungsform der Erfindung in mindestens zwei Richtungen biegbar und vorzugsweise auch tordierbar. Es kann sich also nicht nur in einer ebenen Umlaufbahn bewegen, sondern auch entlang einer Umlaufbahn, die in einer gekrümmten Fläche verläuft. Damit können Rollenkörper ausgerüstet werden, die einer gekrümmten, insbesondere einer kreisförmigen Bahn um einen Kreismittelpunkt, der in Richtung der Rollenachsen vom Rollenelement entfernt ist, folgen. Entsprechend der Tordierbarkeit des Käfigbandes sind auch kompliziertere, zum Beispiel schraubenförmige Bahnformen möglich.

In einer weiteren bevorzugten Ausführungsform bewegt sich der Gegenkörper nicht mit dem Rollenelement mit. Er kann beispielsweise eine Führungsschiene oder ein Körper mit einer Führungsnut sein, oder aber einfach eine ebene Fläche. Eine Belastung des Zentralkörpers in Richtung dieser Fläche wird direkt über die Rollen übertragen. Eine allfällige Lagerung der Rollen wird dabei nicht wesentlich belastet. Diese Rollenlager können also einfachster Weise als Gleitlager ausgeführt sein. Dadurch wird die Konstruktion insgesamt sehr einfach.

Typischerweise ist der Gegenkörper eine stationäre Unterlage oder eine Führungsschiene. Umgekehrt ist aber auch möglich, dass das Rollenelement bezüglich der Umgebung stationär befestigt ist und sich der Gegenkörper bewegt.

In einer weiteren bevorzugten Ausführungsform der Erfindung sind die Rollen im wesentlichen zylindrisch und sind mit einem Zahnradprofil respektive einer Verzahnung versehen. Die der Verzahnung gegenüberliegenden Oberflächen am weiteren Körper weisen jeweils eine korrespondierende Verzahnung auf. Dadurch wird bei einem angetriebenen Rollenkörpers die Übertragung hoher Vortriebskräfte auf ein Laufband oder auf den Gegenkörper ermöglicht. Es kann auch der Zentralkörper selber eine Verzahnung aufweisen, über welche die Verzahnung die Rollen zumindest teilweise am Umfang des Zentralkörpers abrollen.

Anstelle oder zusätzlich zu einer Verzahnung der Rollen zur Kraftübertragung auf den Gegenkörper können auch die seitlichen Distanzierungskörper oder ein Käfigband radial vorstehende Mitnehmer aufweisen, welche zum Eingriff in Eingriffsöffnungen des weiteren Körpers vorgesehen sind.

Vorzugsweise ist der Gegenkörper als Zahnstange ausgebildet, welche entlang ihrer linearen Hauptausdehnungsrichtung vertiefte Eingriffsöffnungen oder ein Zahnprofil aufweist. Die Eingriffsöffnungen dienen beispielsweise zur Aufnahme der Rollen oder der Rollenachsen beim Abrollen des Rollenelements am Gegenkörper, oder zum Eingreifen von Mitnehmern, die an den seitlichen Distanzierungskörpern angebracht sind. In beiden Fällen wird eine formschlüssige Verbindung zwischen Rollenelement und Gegenkörper hergestellt, welche ein gegenseitiges Abrutschen in der linearen Hauptausdehnungsrichtung respektive in der Bewegungsrichtung verunmöglicht.

In weiteren bevorzugten Ausführungsformen der Erfindung liegt ein weiterer Gegenkörper vor, welcher dem Gegenkörper bezüglich des Rollenelements gegenüberliegend angeordnet ist und welcher ebenfalls korrespondierend zum Rollenkörper geformte Mittel zur formschlüssigen Kraftübertragung aufweist. Der umlaufende Rollenkörper greift also auf beiden Seiten des Rollenelements in den Gegenkörper respektive den weiteren Gegenkörper ein und kann so den einen bezüglich des anderen lagern und antreiben.

In einer besonderen Ausführungsform der Erfindung können der Gegenkörper und der weitere Gegenkörper auch kreiszylindrische, konzentrische Flächen aufweisen und ein ringförmiges Lager bilden. Dabei weist der Zentralkörper des Rollenelements an einer ersten Seite einen ersten kreisbogenförmigen Bahnabschnitt auf, und an einer zweiten, der ersten Seite gegenüberliegenden Seite einen zweiten kreisbogenförmigen Bahnabschnitt auf, wobei die beiden kreisbogenförmigen Bahnabschnitte konzentrisch sind. Es sind mindestens drei Rollenelemente zwischen zwei derart gegeneinander zu lagernden Körpern angeordnet, welche über die Rollenelemente aneinander abrollen und angetrieben werden können.

Falls auf die erwähnten Mittel zur Beabstandung verzichtet wird, kann die Erfindung in besonders einfacher Weise realisiert werden. Es wird dabei im allgemeinen in Kauf genommen, dass sich die Rollen berühren und aneinander reiben. In einer bevorzugten Ausführungsform der Erfindung wird dieses Aneinanderreiben in einen Bereich der Umlaufbahn, in welchem die Rollen belastet sind, verhindert. Dies geschieht, indem durch die Gestaltung der Umlaufbahn und/oder der Führung am Zentralkörper dafür gesorgt wird, dass die Rollen jeweils dann einen Abstand aufweisen, wenn sie in diesen Bereich eintreten. Sobald sich die Rollen im belasteten Bereich befinden, ist ihr Abstand durch die beidseitige Abrollbewegung definiert und bleibt konstant. Sind die Rollen tonnenförmig oder als Kugeln ausgeführt, so verringert sich die Berührungs- respektive Reibfläche zwischen Rollen.

Beim Abrollen des Zentralkörpers auf den Rollen und der Rollen wiederum auf dem weiteren Körper bewegt sich der Rollenkörper auf einer Umlaufbahn um den Zentralkörper herum. Dabei laufen die Rollen vorzugsweise in einer Führung des Zentralkörpers, beispielsweise in einer umlaufenden Nut. Diese Führung definiert eine Position der Rollen in ihrer axialen Richtung.

Die Form der Umlaufbahn ist vorzugsweise ein Oval mit halbkreisförmigen Endabschnitten, welche durch einen oberen und einen unteren geradlinigen Abschnitt verbunden sind. Der untere geradlinige Abschnitt ist dem weiteren Körper zugewandt. Die andern Abschnitte müssen nicht zwingend durch die beschriebenen Kreishälften und die Gerade gebildet sein, es genügt, wenn sie eine verlustarme Rückführung des Rollenkörpers auf sich selbst zulassen. In weiteren bevorzugten Ausführungsformen der Erfindung liegen, wie schon oben erwähnt, anstelle der geraden Abschnitte Kreissegmente mit einem gemeinsamen Mittelpunkt vor.

In einer bevorzugten Ausführungsform der Erfindung weist eine Rolle jeweils ein Führungselement auf. Dieses wird durch einen Einschnitt oder einen hervortretenden Teil der Rolle gebildet, beispielsweise durch eine in Drehrichtung der Rolle umlaufende Kerbe respektive Nut, oder aber durch eine Ausbuchtung respektive Rippe an der Rolle. Vorzugsweise ist mit einer Kerbe oder Nut der Rolle korrespondierend eine umlaufende Ausbuchtung oder eine Steg im Zentralkörper ausgebildet, oder umgekehrt zu einer Rippe einer Rolle eine Nut am Zentralkörper. Je nachdem, wie das Rollenelement eingesetzt wird, kann auch im weiteren Körper eine korrespondierende Führung ausgebildet sein.

Die Rollen weisen eine im wesentlichen rotalionszylindrische Form auf. Vorzugsweise sind sie im wesentlichen zylindrisch mit konstantem Durchmesser, oder nach innen oder aussen bombiert respektive ausgebaucht zylindrisch, oder aber auch kugelförmig geformt. Auch bei diesen Formen kann die Form der Umlaufbahn am Zentralkörper und/oder die Form des weiteren Körpers korrespondierend ausgeformt sein.

Die einzelnen Komponenten des Rollenelements können mit verhältnismässig grossen Toleranzen und damit kostengünstig gefertigt werden, ohne dass die Betriebsfähigkeit verringert wird. Die Rollen sind vorzugsweise einstückig und aus einem harten Kunststoff geformt.

Das Rollenelement kann als ovales Wälz- oder Kugellager betrachtet werden, mit dem Vorteil, dass sich eine Last über mehrere Rollen verteilt, und die Anordnung insgesamt belastbarer als herkömmliche Lager mit ähnlichen Dimensionen gefertigt werden kann.

Das erfindungsgemässe Rollenelement ist ferner im Prinzip überall einsetzbar, wo bisher Räder auf ebenen oder regelmässig gekrümmten Flächen abrollen. So kann ein einzelnes Rollenelement in einer Schiene geführt laufen und mit einer Haltevorrichtung für einen zu fördernden Gegenstand, beispielsweise einer Klammer, versehen sein. Oder es können mehrere Rollenkörper an einem Fahrzeug anstelle von herkömmlichen Rädern angeordnet sein. Eine Länge des Zentralkörpers liegt beispielsweise im Bereich zwischen 2 cm und 20 cm bis 50 cm, und ein Rollendurchmesser im Bereich zwischen 4 mm und 10 cm.

In einer bevorzugten Ausführungsform der Erfindung weist der Rollenkörper in sich und/oder in seiner Beweglichkeit bezüglich des Zentralkörpers ein Spiel auf. Durch einfache Form der Rollen in Verbindung mit dem zulässigen Spiel ist einerseits eine konstruktiv einfache Führung des Rollenkörpers um den Zentralkörper realisierbar, und wird andererseits eine kostengünstige Fertigung insbesondere des Rollenkörpers möglich. Der Rollenkörper kann also aus lose verbundenen Elementen bestehen und beispielsweise in einer umlaufenden Nut im Zentralkörper zuverlässig geführt werden. Im Gegensatz zum Stand der Technik wird das Spiel nicht durch Federn eliminiert, sondern zugelassen oder sogar vergrössert und mit einer entsprechend robusten oder toleranten Führung kombiniert. Das Rollenelement weist also keine weiteren Elemente auf, die den Rollenkörper an den Zentralkörper heranziehen oder halten.

Das Spiel des Rollenkörpers bezüglich des Zentralkörpers ist vorzugsweise derart gross, dass sich der Rollenkörper an einer Stelle um mindestens 1/5 oder ½ eines Rollendurchmessers vom Zentralkörper abheben lässt. Je nach den Dimensionen einer Führung des Rollenkörpers kann auch ein Abheben um bis zu einem ganzen Rollendurchmesser toleriert werden, jedoch immer nur derart weit - unter Berücksichtigung des Spiels des Rollenkörpers als ganzem in seitlicher respektive axialer Richtung - dass die Rollen die Führung nicht seitlich verlassen können.

In einer anderen Formulierung kann das Spiel auch dadurch quantifiziert werden, dass eine Länge des Rollenkörpers um mindestens 2% bis 5% grösser ist als die Länge eines ohne Spiel anliegenden Rollenkörpers.

Weitere bevorzugte Ausführungsformen gehen aus den abhängigen Patentansprüchen hervor.

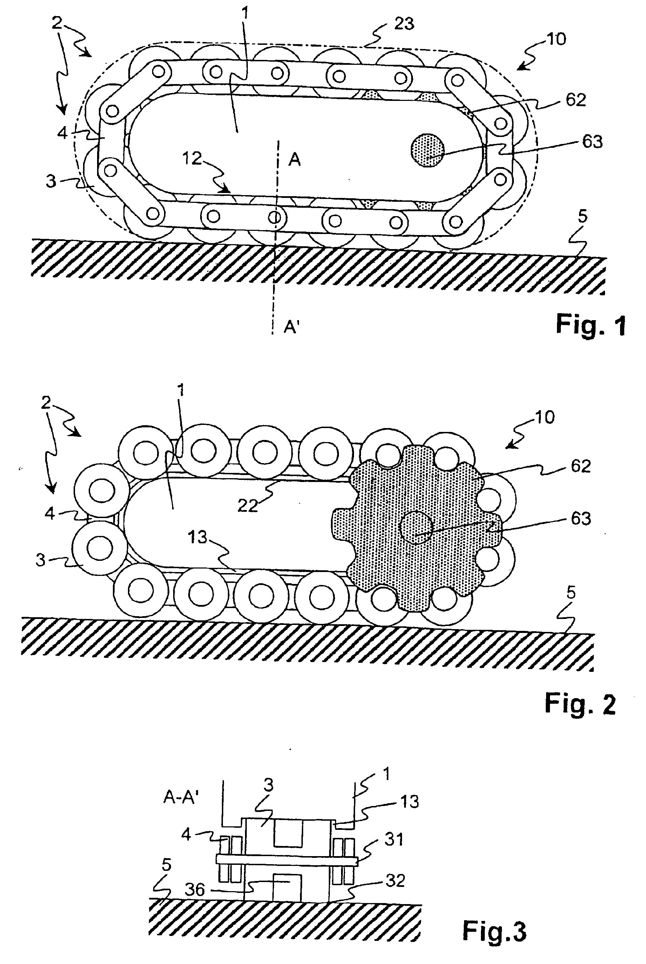

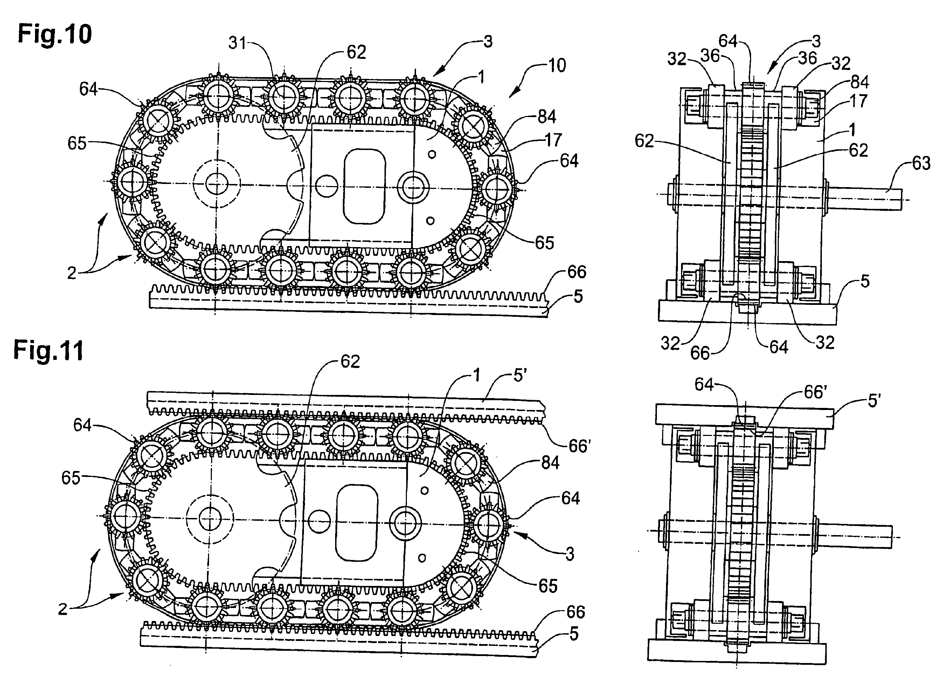

Im folgenden wird der Erfindungsgegenstand anhand von bevorzugten Ausführungsbeispielen (siehe Figuren 10-17 und 26-29) und von Beispielen (siehe Figuren 1-9 und 18-25), welche kein Teil der Erfindung sind, aber, das Verständnis der Erfindung erleichtern, näher erläutert. Es zeigen jeweils schematisch:
- Figur 1: eine Seitenansicht eines Rollenelements mit Antrieb;
- Figur 2: einen Längsschnitt durch ein Rollenelement gemäss Figur 1:
- Figur 3: einen Querschnitt durch einen Teil eines Rollenelements aus der Ansicht gemäss Figur 1;
- Figuren 4 und 5: Rollenelemente mit Distanzierungskörpern;
- Figur 6: einzelne Rollen mit Distanzierungskörpem;
- Figuren 7 bis 9: Rollenelemente mit Antrieb;
- Figuren 10 bis 13: Rollenelemente mit verzahnten Kontaktbereichen;
- Figuren 14 und 15: ein weiteres Rollenelement mit formschlüssiger Kraftübertragung über die Rollen;
- Figuren 16 und 17: ein Rollenelement mit formschlüssiger Kraftübertragung über die Distanzierungskörper;
- Figur 18: einen Querschnitt durch einen Teil eines Rollenelements aus der Ansicht gemäss Figur 7;
- Figur 19: einen Querschnitt durch einen Teil eines Rollenelement mit einem Band zur Distanzierung der Rollen;
- Figur 20: eine Seitenansicht eines Rollenelements gemäss Figur 19;
- Figur 21: ein Rollenelement mit einem Antrieb über ein Band;
- Figur 22: ein Rollenelement mit einem als Zahnriemen;
- Figur 23: verschiedene Formen von Rollen;
- Figur 24: eine Seitenansicht eines Rollenelements mit einem Laufband;
- Figur 25: einen Querschnitt durch einen Teil eines Rollenelements aus der Ansicht gemäss Figur 24;
- Figuren 26 und 27: Ausführungsformen der Erfindung in Verbindung mit einem Greifer; und
- Figuren 28 und 29: weitere Ausführungsformen der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

**Figur 1** zeigt schematisch eine Seitenansicht und **Figur 2** schematisch einen Längsschnitt eines Rollenelements 10. Das Rollenelement 10 weist einen Zentralkörper 1 und einen um diesen umlaufenden Rollenkörper 2 auf. Der Rollenkörper 2 besteht aus einer Mehrzahl von Rollen 3, deren Lagerachsen 31 durch Kettengliedplatten 4 miteinander verbunden sind.

Die Kettengliedplatten 4 bilden zusammen mit den Rollen 3 eine Rollenkette. Die Durchmesser der Rollen 3 sind dabei bezüglich der Kettengliedplatten 4 so gross, dass die Rollen 3 nach innen wie auch nach aussen in radialer Richtung über die Kettengliedplatten 4 hinausragen. Damit bildet eine innen liegende Seite der Gesamtheit der Rollen 3 eine Innenseite 22 des Rollenkörpers 2. Entsprechend bildet eine aussen liegende Seite der Gesamtheit der Rollen 3 eine Aussenseite 23 des Rollenkörpers 2. Diese Innenseite 22 und Aussenseite 23 sind gedachte Einheiten, die Aussenseite 23 ist in der **Figur 1** strichliert eingezeichnet. An der Innenseite 22 können die Rollen 3 am Zentralkörper 1 abrollen, an der Aussenseite 23 an einem weiteren Körper, in der Folge Gegenkörper 5 genannt. Wenn die Seite des Zentral körpers 1, die dem Gegenkörper 5 zugewandt ist, eine der Form des Gegenkörpers 5 korrespondierende Form aufweist, so verteilt sich eine Belastung des Zentralkörpers 1 in Richtung des Gegenkörpers 5 auf mehrere Rollen 3. Hier gezeigt ist ein ebener Gegenkörper 5 und korrespondierend ein geradliniger Abschnitt 12 des Zentralkörpers 1. Bei einer Verschiebung des Zentralkörpers 1 in der Zeichnungsebene parallel zum Gegenkörper 5 rollt der Zentralkörper 1 über die Rollen 3 am Gegenkörper 5 ab. Dabei bewegt sich der Rollenkörper 2 in einer Umlaufbahn 21 um den Zentralkörper 1 herum.

Zum Antrieb des Rollenkörpers 2 weist das Rollenelement 10 ein Kettenrad oder Zahnrad 62 auf, welches von innen in den Rollenkörper 2, zwischen den Rollen 3 eingreift. Zur Aufnahme von Zähnen des Zahnrades weisen die Rollen 3 jeweils eine in Umfangsrichtung umlaufende Nut oder einen Schlitz auf, sie haben also einen H-förmigen Querschnitt. Das Zahnrad 62 wird durch eine Antriebswelle 63 angetrieben, welche in axialer Richtung in eine oder beide Richtungen aus dem Rollenelement 10 ragt und durch einen nicht gezeichneten Antrieb in Bewegung versetzt werden kann.

**Figur 3** zeigt einen Querschnitt A-A' durch einen Teil eines Rollenelements 10 gemäss **Figur 1** oder **2****.** Es wird sichtbar, wie die Rollen 3 in einer Führungsnut 13 des Zentralkörpers 1 verlaufen und durch diese in axialer Richtung gehalten werden. Die Führungsnut 13 verläuft abschnittsweise oder vollständig entlang der Umlaufbahn 21 des Rollenkörpers 2.

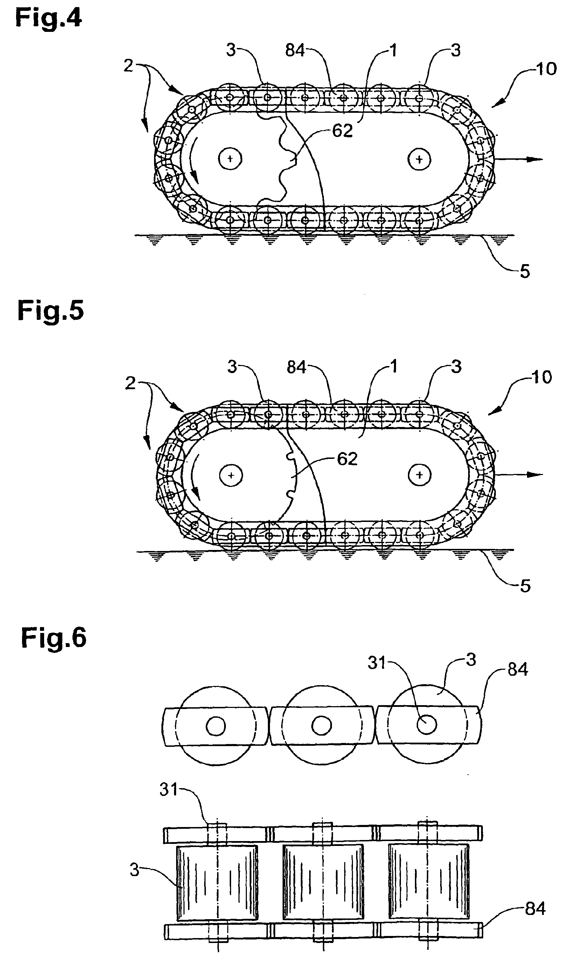

**Figuren 4 und 5** zeigen Rollenelemente 10, deren Rollenkörper 2 seitliche Distanzierungskörper 84 zur Beabstandung der Rollen 3 aufweisen. In der **Figur 6** ist zur Illustration eine kurze Folge von Rollen 3 mit dazugehörigen seitlichen Distanzierungskörpern 84 ohne weitere Elemente eines Rollenelements 10 gezeichnet. Die Distanzierungskörper 84 sind im wesentlichen quaderförmig geformt und weisen in der Mitte von einer der Seitenflächen eine Bohrung zur losen Aufnahme einer Lagerachse 31 einer Rolle 3 auf. Diese Seitenfläche ist in einer Richtung länger als der Rollendurchmesser, und in der anderen Richtung kürzer als der Rollendurchmesser. Die Distanzierungskörper 84 sind somit in Laufrichtung grösser als der Rollendurchmesser, wodurch die Rollen 3 voneinander beabstandet werden. Die aneinander stossenden Enden der Distanzierungskörper 84 sind vorzugsweise Zylindersegmentflächen, wobei deren Zylinderachse mit der Lagerachse 31 zusammenfällt. Dadurch können sich die Enden aufeinanderfolgender Distanzierungskörper 84 aneinander abwälzen. Dies ermöglicht insbesondere bei Richtungsänderungen eine leichte Bewegung des Rollenkörpers 2. Die Distanzierungskörper 84 sind auf kurze Achszapfen oder Lagerachsen 31 der Rollen 3 gesteckt. Die Lagerachsen 31 und die Distanzierungskörper 84 weisen vorzugsweise ein vergleichsweise grosses Spiel auf, so dass die Lagerachsen 31 lose in den Distanzierungskörpern 84 drehen. Sie können also mit grossen Toleranzen kostengünstig gefertigt werden.

Gemäss der **Figur 5** greift das Zahnrad 62 an den Rollen 3 an einer mittigen Nut 36 an. Gemäss der **Figur 6** weist das Zahnrad 62 zwei parallel angeordnete Teilzahnräder auf, welche jeweils beiderseits der Rollen 3 an den Lagerachsen 31 angreifen. Dementsprechend sind die eingreifenden Aussparungen am Zahnrad 62 der **Figur 6** kleiner als bei jenem der **Figur 5**. So gesehen kann das Zahnrad 62 auch als Zylinder mit mehreren halbkreisförmigen Ausnehmungen in radialer Richtung betrachtet werden.

Wie in den Querschnitten der **Figuren 10** bis **16** sichtbar, sind die seitlichen Distanzierungskörper 84 durch die Förderbahn 17 teilweise umfasst, und werden so in radialer Richtung zurückgehalten respektive am Herausfallen gehindert. Auch hier ist vorzugsweise ein grosses Spiel vorhanden.

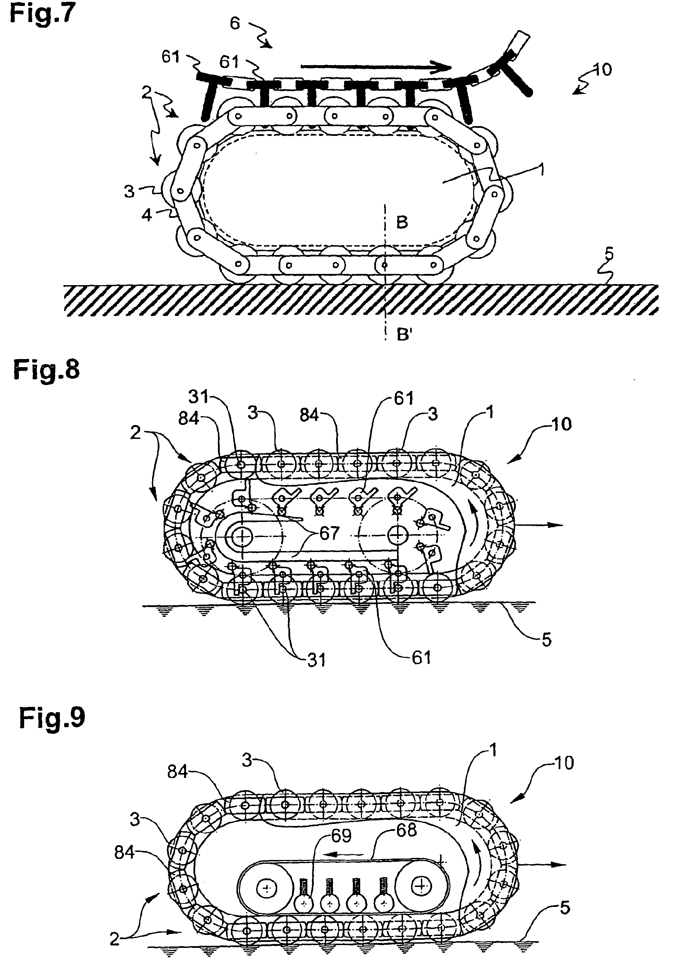

**Figur 7** zeigt eine Seitenansicht eines Rollenelements mit einem Antrieb 6. Der Antrieb 6 weist mehrere Antriebsnocken 61, Zähne oder Mitnehmer auf, die kettenartig miteinander verbunden sind. Die Kette ist nur ausschnittsweise gezeichnet und wird durch nicht gezeichnete Antriebsmittel in Bewegung versetzt. Die in Pfeilrichtung bewegten Antriebsnocken 61 greifen in den Rollenkörper 2 ein und verursachen eine Bewegung des Rollenkörpers 2 um den Zentralkörper 1. Diese Bewegung wiederum führt zu einer Bewegung des Zentralkörpers 1 bezüglich des Gegenkörpers 5, ebenfalls in Pfeilrichtung, aber mit der halben Geschwindigkeit der Antriebsnocken 61 bezüglich des Gegenkörpers 5.

**Figur 8** zeigt schematisch ein Rollenelement 10 mit einer Kette von umlaufenden Antriebsnocken 61, welche innerhalb des Zentralkörpers 1 angeordnet sind und von innen her in den Rollenkörper 2 eingreifen. Ein Band oder eine Kette zur Verbindung und zum Antrieb der Antriebsnocken 61 ist nur schematisch als Linie eingezeichnet. Die Antriebsnocken 61 verlaufen in einem ersten Bereich, ohne in den Rollenkörper 2 einzugreifen, und werden durch eine Steuerkurve 67 in einem zweiten Bereich in Eingriff mit dem Rollenkörper 2 gebracht. Dabei sind die Antriebsnocken 61 derart angeordnet, dass sie an den Lagerachsen 31 der Rollen 3 angreifen und diese dadurch antreiben. Sie können aber alternativ auch an den Rollen 3 selber oder an den Distanzierungskörpern 84 angreifen.

**Figur 9** zeigt schematisch ein Rollenelement 10 mit einem Antriebsband 68 welches innerhalb des Zentralkörpers 1 angeordnet ist und von innen her den Rollenkörper 2 antreibt. Dazu wird das Antriebsband 68 entlang eines Abschnittes des Rollenkörpers 2 mittels beispielsweise Andruckrollen 69 an den Rollenkörper 2 gedrückt. Eine Bewegung des Antriebsbandes 68 führt zu einer Drehung der Rollen 3 und dadurch zu einer Bewegung des Zentralkörpers 1 bezüglich des Gegenkörpers 5.

In anderen bevorzugten Ausführungsformen greifen die Antriebsnocken 61 nicht zwischen den Rollen 3 sondern an vorstehenden Elementen der Kettengliedplatten 4 oder der Lagerachsen 31 an einer oder an beiden Seiten der Rollenkörpers 2 an. Anstelle einer Antriebskette können als Antrieb 6 auch ein oder mchrere Zahnräder eingesetzt werden, deren Zähne am Rollenkörper 2 eingreifen. Der Antrieb 6 kann, je nach Grösse des Rollenelements 10 und des Zentralkörpers 1 auch innerhalb des Rollenkörpers 2 angeordnet sein und von innen in diesen eingreifen.

Zur Aufnahme der Antriebsnocken 61 respektive Zahnradzähne sind die Rollen 3 vorzugsweise mit in Drehrichtung umlaufenden Nuten 36 oder Einschnitten versehen, wie beispielsweise in **Figur 3** gezeigt. Jede Rolle 3 weist also in axialer Richtung mindestens einen Abschnitt mit einem grösseren Durchmesser auf, welcher auf dem Zentralkörper 1 und dem Gegenkörper 5 oder einem Laufband 24 abrollt, und einen Abschnitt mit einem kleineren Durchmesser, an welchem der Antrieb 6 angreift. Dieser Abschnitt mit kleinerem Durchmesser kann auch separat gelagert und bezüglich der Abschnitte mit grösserem Durchmesser frei drehbar sein. Dies erleichtert die Bewegung des Rollenkörpers 2 im angetriebenen Bereich.

**Figur 10** zeigt einen Längsschnitt durch einen Teil einer Ausführungsform der Erfindungs mit verzahnten Kontaktbereichen 64 der Rollen 3. Der Gegenkörper 5 ist zum Teil, neben einer Rollfläche, als Zahnstange ausgebildet, welche entlang ihrer linearen Hauptausdehnungsrichtung eine Verzahnung aufweist, welche mit der Verzahnung 64 der Rollen 3 korrespondiert. Die Verzahnung 64 der Rollen 3 greift beim Abrollen des Rollenelements 10 am Gegenkörper 5 in die Verzahnung 66 des Gegenkörpers 5 ein. Ebenso greift die Verzahnung 64 der Rollen 3 beim Abrollen des Rollenelements 10 am Zentralkörper 1 in eine Verzahnung 65 des Zentralkörpers 1 ein. Dadurch ergibt sich unter anderem eine definierte Position der Rollen 3 beim Einfahren gegen die Zahnstange 66. Das Rollenelement 10 und der Gegenkörper 5 bilden zusammen eine Antriebseinheit.

Durch die Verzahnung können bei einem angetriebenen Rollenelement 10 hohe Antriebskräfte übertragen werden. So kann die Zahnstange am Gegenkörper 5 geneigt oder senkrecht angeordnet werden, so dass der Rollenelement 10 an dieser hinauf- und hinunterklettern kann. In einer weiteren Ausführungsform der Erfindung sind zwei solcher Rollenelemente 10 im wesentlichen fest miteinander verbunden und zwischen einander gegenüberliegenden Gegenkörpern 5 angeordnet.

Im Querschnitt der **Figur 10** ist zu sehen, dass eine Rolle 3 entlang der Achsrichtung verschiedene Abschnitte aufweist. Von aussen gesehen sind dies: Ein Achsbereich, in welchem die Lagerachse 31 im Distanzierungskörper 84 liegt, ein Rollbereich mit den Rollflächen 32, die am Zentralkörper 1 und zeitweise am Gegenkörper 5 abrollen, ein Antriebsbereich, in dem die Rollen 3 eine Nut 36 mit einem kleineren, inneren Rollendurchmesser 37 aufweisen, bei welchem sie von den beiden Scheiben des Zahnrades 62 erfasst und gefördert werden, und in der Mitte einen Bereich mit der Verzahnung 64. Die Verzahnung 64 liegt in der Mitte der Rollen 3, da bei ausserhalb liegenden Paaren von Zahnrädern die Gefahr des Verkantens und Verklemmens der Zähne grösser wäre.

**Figur 11** zeigt eine Ausführungsform der Erfindung mit einem weiteren Gegenkörper 5', welcher dem Gegenkörper 5 bezüglich des Rollenelements 10 gegenüberliegend angeordnet ist und welcher ebenfalls als Zahnstange mit einer weiteren Verzahnung 66' ausgebildet ist.

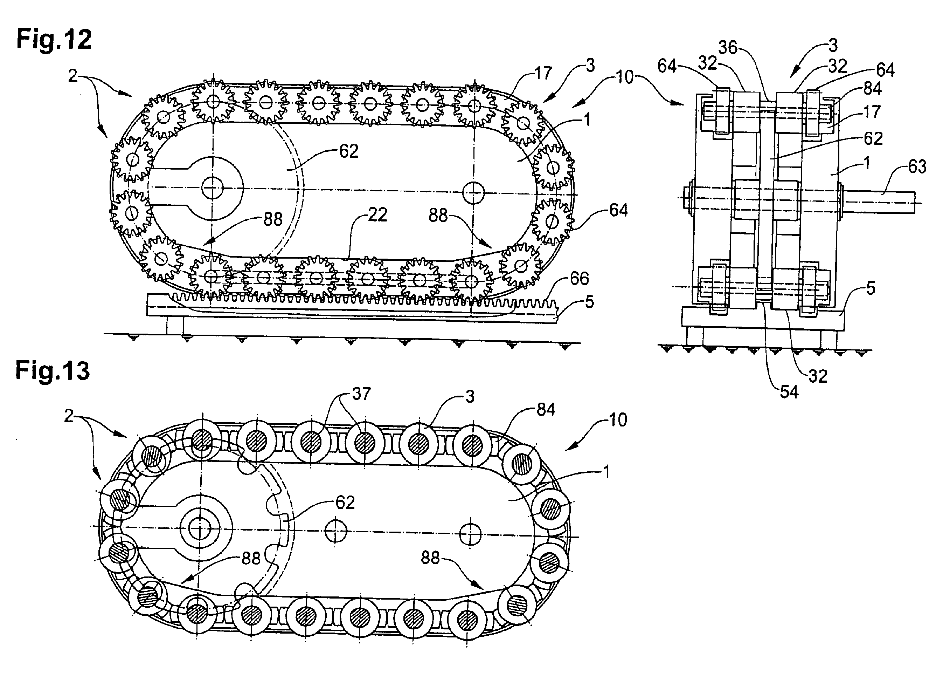

**Figur 12** zeigt einen Querschnitt und einen Längsschnitt im Bereich der Verzahnung 64 der Rollen 3 einer erfindungsgemäßen Antriebseinheit, bei welcher der Zentralkörper 1 keine Verzahnung aufweist. Die Rollen 3 weisen aber eine Rollfläche 32 auf, welche an einer ebenen Fläche des Gegenkörpers 5 abrollt. Der Durchmesser der im wesentlichen zylindrischen Rollfläche 32 ist gleich dem Durchmesser des Wälzkreises der Verzahnung 64 der Rollen 3, so dass keine Geschwindigkeitsdifferenzen auftreten. Eine Belastung des Rollenelements 10 senkrecht zum Gegenkörper 5 wird durch die Rollflächen 32 aufgenommen. Beim Antrieb des Rollenkörpers 2 durch das Zahnrad 62 werden die Rollen 3 durch die Distanzierungskörper 84 in Umlauf um den Zentralkörper 1 versetzt und treiben dank des Reibschlusses über die Rollflächen 32 das Rollenelement 10 an. Um den Reibschluss zu verbessern sind vorzugsweise die Rollfläche 32 und/oder die korrespondierende Fläche des Gegenkörpers 5 mit hafterhöhenden Mitteln ausgestattet, indem sie beispielsweise gummiert oder mit einer Kunststoffbeschichtung versehen sind.

Beim Abrollen des Rollenelements 10 auf dem Gegenkörper 5 stellt sich das Problem, dass die Verzahnungen 64 der Rollen 3 korrekt in die Verzahnung 66 des Gegenkörpers 5 zu liegen kommen müssen. Da die Orientierung der Rollen 3, die in der Förderbahn 17 nach unten zum Gegenkörper 5 hin gefördert werden, nicht definiert ist, könnte es geschehen, dass sich die Zähne der Rollen 3 und des Gegenkörpers 5 verklemmen. Deshalb weist die Förderbahn 17 am Anfang und am Ende des Abschnittes, der entlang des Gegenkörpers 5 verläuft, Einlaufbereiche oder Einrastbereiche 88 auf. In den Einrastbereichen 88 werden die Rollen 3 durch die Bewegung des Rollenkörpers 2 bereits parallel zum Gegenkörper 5 geführt, werden aber nur durch die Schwerkraft gegen den Gegenkörper 5 gedrückt, und nicht durch die Innenseite 22 der Förderbahn 17. Es wirken also noch keine höheren Belastungen senkrecht zum Gegenkörper 5, so dass eine Rolle 3 mit ihrer Verzahnung 64 in radialer Richtung nachgeben und etwas rutschen kann, um in die Verzahnung 66 des Gegenkörpers 5 einzurasten. Die Innenseite 22 der Förderbahn 17, auf welcher die Rollen 3 am Zentralkörper 1 abrollen, ist also nicht vollständig oval, sondern weist bei den Einrastbereichen 88 eine Einbuchtung des Übergangs zwischen den Halbkreisen und dem linearen Abschnitt des Ovals auf.

Im Querschnitt der **Figur 12** sind die Abschnitte einer Rolle 3 entlang der Achsrichtung zu sehen: Auf einen Achsbereich folgt der Bereich mit der Verzahnung 64, ein Rollbereich mit den Rollflächen 32, und in der Mitte ein Antriebsbereich, in dem die Rollen 3 von einer einzigen Scheibe des Zahnrades 62 erfasst und gefördert werden.

**Figur 13** zeigt einen Längsschnitt im Bereich des antreibenden Zahnrades 62 durch das Rollenelement 10 von **Figur 12****.** Hier wird der Eingriff des Zahnrades 62 an der Nut 36 mit dem kleineren, inneren Rollendurchmesser 37 sichtbar. Um eine radiale Bewegung der Rollen 3 im Einrastbereich 88 zu ermöglichen, sind die Eingriffsstellen am Zahnrad 62 tiefer eingeschnitten, als dies für eine reine Kreisbewegung der Rollen 3 nötig wäre.

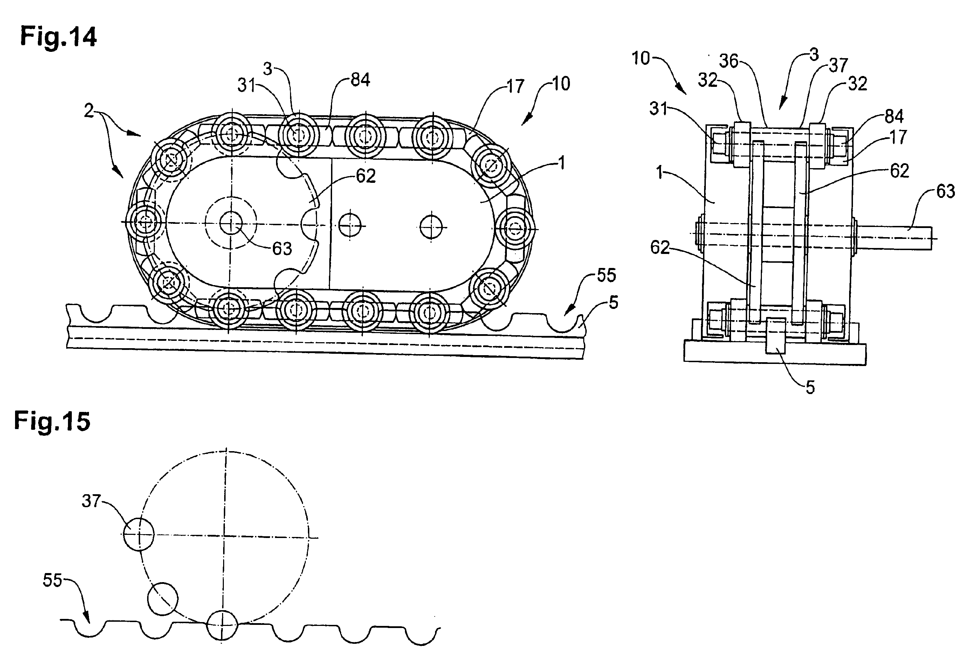

**Figur 14** zeigt einen Längsschnitt und einen Querschnitt durch eine weitere Ausführungsform der Erfindung bei welcher der Gegenkörper 5 stellenweise als Zahnstange ausgebildet ist, welche entlang ihrer linearen Hauptausdehnungsrichtung vertiefte Eingriffsöffnungen 55 zur Aufnahme der Rollen 3, insbesondere in einem Bereich von Nuten 36 der Rollen 3, aufweist. Dabei kommen also die Rollen 3 beim Abrollen des Rollenelements 10 am Gegenkörper 5 in die Eingriffsöffnungen 55 zu liegen. Der Abstand der Eingriffsöffnungen in Richtung der linearen Hauptausdehnungsrichtung 55 entspricht dem Abstand der Rollen 3, wie er durch die Distanzierungskörper 84 bestimmt wird.

Im Querschnitt der **Figur 14** ist zu sehen, dass eine Rolle 3 in einem mittleren Bereich einer Nut 36 mit einem inneren Rollendurchmesser 37 jeweils zeitweise einerseits von zwei Scheiben des Zahnrades 62 erfasst wird und andererseits in die Eingriffsöffnungen 55 des Gegenkörpers 5 zu liegen kommt.

**Figur 15** zeigt schematisch eine kreisförmige Bewegungslinie der inneren Rollendurchmesser 37 bezüglich des Gegenkörpers 5 mit den Eingriffsöffnungen 55. An der Antriebskraftübertragung parallel zum Gegenkörper 5 sind jeweils die Rollen 3 beteiligt, die in einer der Eingriffsöffnungen 55 liegen.

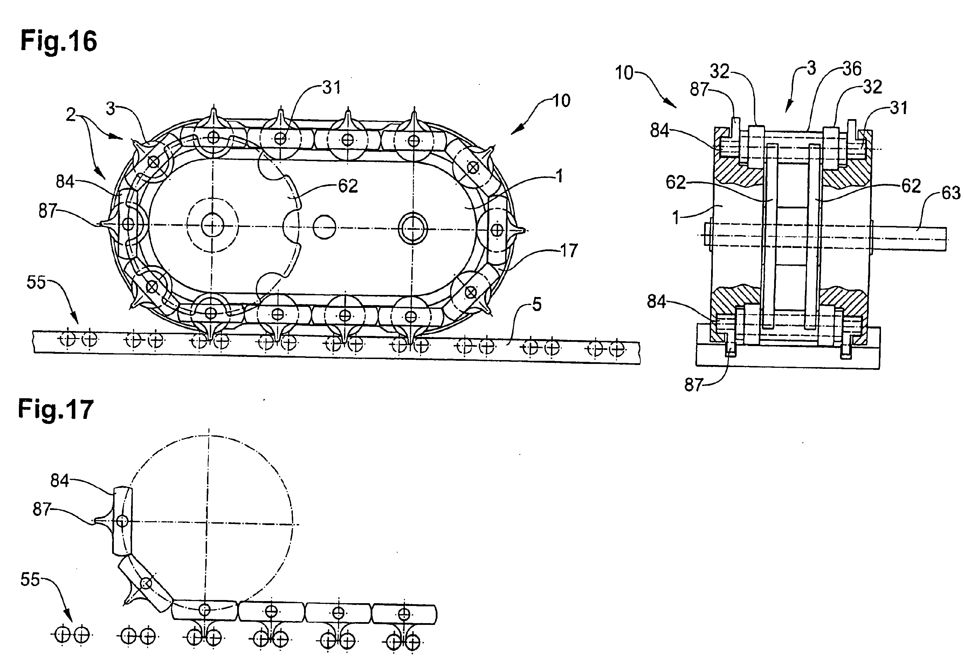

**Figur 16** zeigt einen Längsschnitt und einen Querschnitt durch eine andere Ausführungsform der Erfindung bei welcher die-seitlichen Distanzierungskörper 84 radial vorstehende Mitnehmer 87 aufweisen, welche in Eingriftsöffnungen 55 des weiteren Körpers 5 eingreifen. Analog zur vorhergehenden Ausführungsform der Erfindung werden hier die Antriebskräfte durch die Mitnehmer 87 anstelle der inneren Rollendurchmesser 37 übertragen. In beiden Ausführungsformen wird aber die Last senkrecht zum Gegenkörper 5 durch die Rollen 3 aufgenommen.

Im Querschnitt der **Figur 16** ist zu sehen, dass eine Rolle 3 in einem mittleren Bereich mit einem inneren Rollendurchmesser 37 jeweils zeitweise einerseits von zwei Scheiben des Zahnrades 62 erfasst wird. Anstelle von zwei Scheiben könnte auch nur eine einzige verwendet werden. Die Distanzierungskörper 84 weisen, in Achsrichtung gesehen, einen Abschnitt auf, der von Förderbahn 17 umschlossen ist und den Distanzierungskörper 84 zurückhält, und einen Abschnitt in welchem der Mitnehmer 87 über den Rand der Förderbahn 17 radial herausragt.

**Figur 17** zeigt schematisch eine Relativbewegung von Distanzierungskörpern 84 mit Mitnehmern 87 bezüglich den Eingriffsöffnungen 55 des Gegenkörpers 5. Auch hier sind jeweils mehrere Mitnehmer 87 an der Antriebskraftübertragung beteiligt.

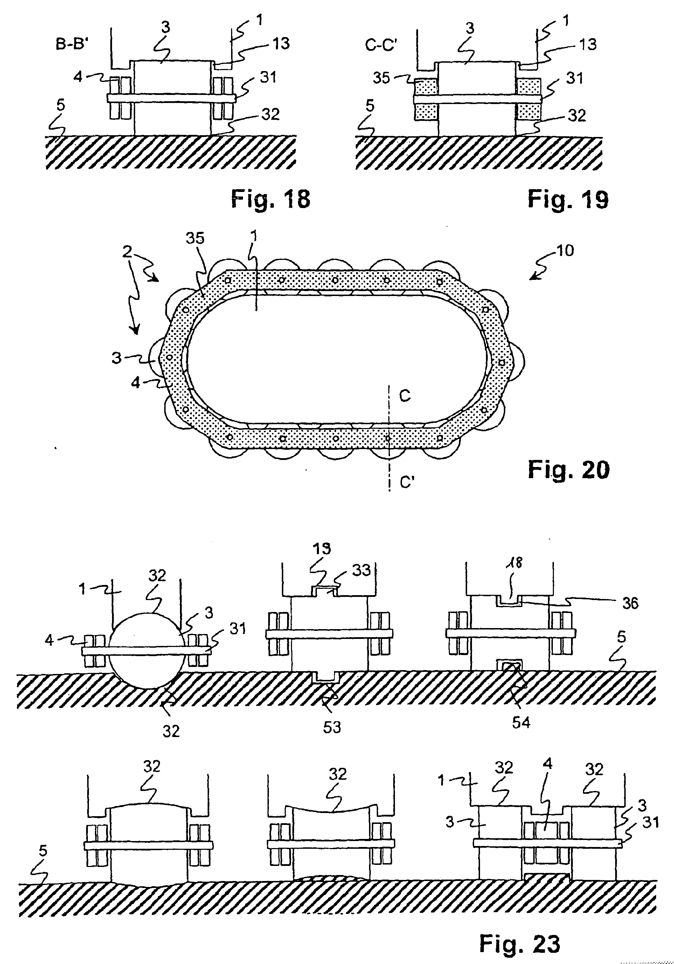

**Figur 18** zeigt einen Querschnitt B-B' durch einen Teil eines Rollenelements aus der Ansicht gemäss **Figur 7****.** Wie in der **Figur 3** verlaufen die Rollen 3 in einer Führungsnut 13, da die Rollen 3 jedoch zum Eingreifen der Antriebsnocken 61 voneinander mehr als gemäss den **Figuren 1** bis 3 beabstandet sind, sind die Rollen 3 walzenförmig und ohne Nut ausgestaltet.

**Figur 19** zeigt einen Querschnitt C-C' gemäss **Figur 20** durch einen Teil eines Rollenelements 10 mit einem flexiblen Band oder Lagerband 35 anstelle von Kettengliedplatten 4 zur Distanzierung der Rollen. Das Lagerband 35 ist in gleichmässigen Abständen mit Löchern zur Aufnahme der Lagerachsen 31 versehen. **Figur 20** zeigt eine entsprechende Seitenansicht.

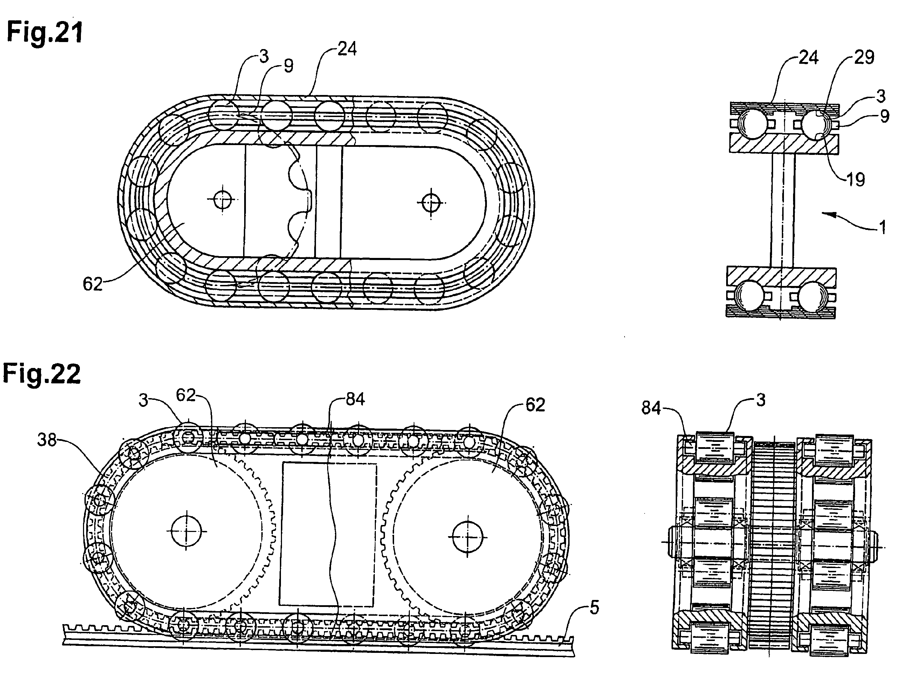

**Figur 21** zeigt einen Antrieb mittels eines Käfigbandes 9, bei welchem das Zahnrad 62 am Käfigband 9 anstelle der Rollen 3 angreift. Das Laufband 24 ist bezüglich des Zentralkörpers 1 durch zwei Käfigbänder 9 gelagert. Das Käfigband 9 weist eine Mehrzahl von linear miteinander verbundenen Rollen auf, wobei die Rollen durch einen flexiblen und insbesondere auch elastischen Verbindungskörper miteinander verbunden und voneinander beabstandet sind. Das Zahnrad 62 greift in Aussparungen des Käfigbandes 9 ein und treibt dieses an. Alternativ kann des Zahnrad 62 zwischen zwei parallelen Käfigbändern 9 hindurch am Laufband 24 angreifen.

In der Ausführungsform gemäss der **Figur 22** weist der Zentralkörper 1 zwei parallel verlaufende Rollenkörper 2 auf, zwischen denen ein Zahnriemen 38 um den Zentralkörper 1 verläuft. Der Zahnriemen 38 weist innen wie aussen Zähne auf, so dass die Innenseite über zwei Zahnräder 62 läuft, und die Aussenseite am Gegenkörper 5 angreifen kann und den Zentralkörper 1 bezüglich des Gegenkörpers 5 antreibt (oder umgekehrt). Eine Last senkrecht zum Gegenkörper 5 wird also durch die Rollen 3 aufgenommen, eine Antriebskraft parallel zum Gegenkörper 5 wird über den Zahnriemen 38 übertragen. Durch die Verwendung eines Zahnriemens wird die Antriebskraft über mehrere Zähne des linearen Abschnittes entlang des Gegenkörpers 5 verteilt. Analoge Ausführungsformen können auch nur einen Rollenkörper 2 oder mehrere Zahnriemen 38 aufweisen.

**Figur 23** zeigt verschiedene Formen von Rollen 3. Die Rollen 3 können also als Zylinder mit konstantem Durchmesser ausgebildet sein, die Zylinder können aber auch nach innen oder aussen bombiert respektive ausgebaucht sein. Dies ist je nach Anwendung von Vorteil. Beispielsweise erlauben die bombierten Formen eine Kippbewegung des Zentralkörpers 1 bezüglich des Gegenkörper 5.

Die Rollen 3 können auch kammartige Führungselemente 33 aufweisen, die mit entsprechenden nutenartigen Führungselementen 13, 53 des Zentralkörpers 1 und des Gegenkörpers 5 korrespondieren. Umgekehrt können auch die Rollen 3 nutenartige Führungselemente 36 aufweisen und entsprechend der Zentralkörper 1 und/oder der Gegenkörper 5 steg- oder kammartige Führungselemente 18, 54. Durch die korrespondierenden Führungselemente 13, 33, 53, 18, 36, 54 respektive durch die Verwendung von bombierten oder kugelförmigen Rollen 3 können seitliche Kräfte aufgenommen werden und wird ein Abweichen der Bewegung des Rollenkörpers 2 von der entsprechenden Führungsrichtung der Führungselemente verhindert.

In einer weiteren bevorzugten Ausführungsform der Erfindung weist eine Rolle 3 zwei koaxiale Rollenhälften auf, die durch eine Achse verbunden sind. Die Kettenglieder 4 zur Verbindung der Achsen von benachbarten Rollen 3 sind dabei an der Achse 31 zwischen den Rollenhälften befestigt.

Bei den in **Figur 23** gezeigten und in weiteren Ausführungsformen kann jeweils eine umlaufende Kette aus Kettengliedplatten 4 durch ein Lagerband 35 ersetzt werden.

Die in **Figur 23** gezeigten Rollen können, beispielsweise im Zusammenhang mit einem Zahnrad wie in den **Figuren 1**, **2** und **5**, jeweils Nuten zum Eingriff von Zähnen aufweisen.

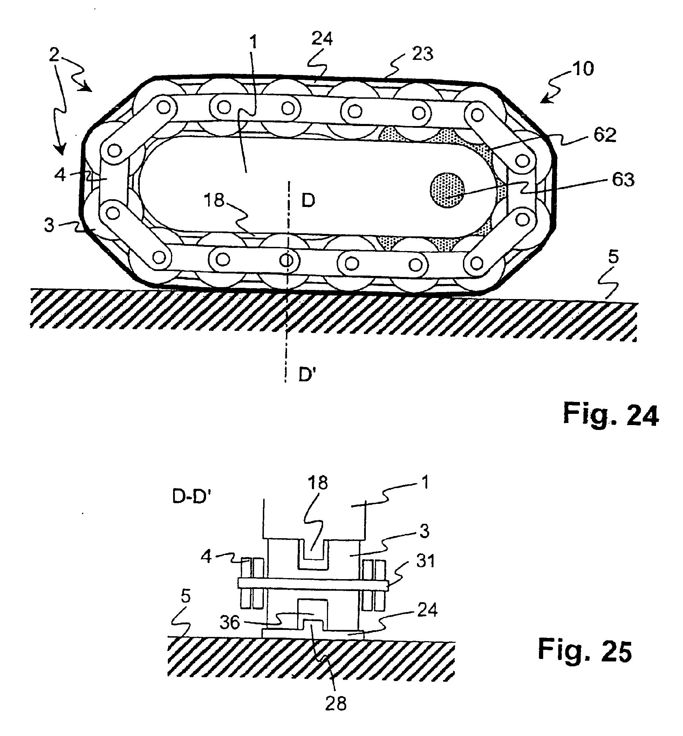

**Figur 24** zeigt eine Seitenansicht eines Rollenelements 10 mit einem Laufband 24. Das Laufband 24 verläuft entlang der gesamten Aussenseite 23 des Rollenkörpers 2 und umschliesst diesen. Das Laufband 24 kann aus einem flexiblen Material wie Kunststoff oder Gummi, als Zahnriemen, oder entsprechend einer Raupenkette aus starrem Material ausgebildet sein.

**Figur 25** zeigt einen Querschnitt D-D' durch einen Teil eines Rollenelements 10 aus der Ansicht gemäss **Figur 24**. Dabei weist die Rolle 3 eine in Drehrichtung umlaufende Nut als Führungselement 36 auf. In die Nut 36 ragt einerseits ein Führungssteg 18 des Zentralkörpers 1 und andererseits ein Führungssteg 28, der am Laufband 24 angeformt ist. Ferner kann bei einem angetriebenen Rollenelement 10 auch der Antrieb 6 in die Nut 36 eingreifen.

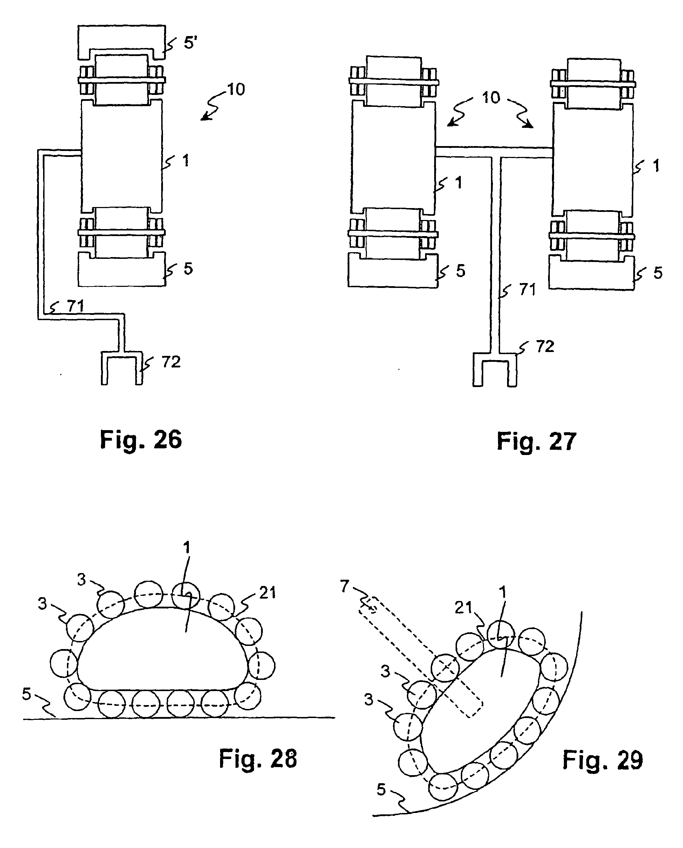

**Figuren 26** und **27** zeigen schematisch und im Querschnitt Ausführungsformen der Erfindung in Verbindung mit einem Greifer 72. In **Figur 26** ist ein Rollenelement 10 in einem als Schiene ausgestalteten Gegenkörper 5 auf einer Seite gelagert und wird auf der gegenüberliegenden Seite durch einen weiteren Gegenkörper 5' stabilisiert. Am Rollenelement 10 ist ein Arm 71 befestigt, der einen Greifer 72 trägt. Gemäss **Figur 27** sind zwei seitlich versetzt angeordnete und in zugeordneten Schienen 5 geführte Rollenelemente 10 durch einen Arm 71 verbunden.

**Figuren 28** und **29** zeigen schematisch weitere Ausführungsformen der Erfindung: Es ist nicht zwingend notwendig, dass die Rollen 3 auf einer ovalen Umlaufbahn 21 verlaufen. **Figur 28** zeigt einen stückweise geraden und sonst gekrümmten Verlauf der Umlaufbahn 21. **Figur 29** zeigt einen Verlauf ohne geradlinige Abschnitte, bei welchem ein Teil der Umlaufbahn 21 eine Krümmung aufweist, die mit einer Krümmung des Gegenkörpers 5 korrespondiert, welcher eine kreisförmige Kontaktfläche zum Rollenelement 10 bildet. Dabei kann das Rollenelement 10 durch einen Hebel um eine Drehachse 7 drehbar angeordnet sein. Umgekehrt kann in einer anderen Ausführungsform der Erfindung auch die Umlaufbahn 21 stellenweise nach innen gekrümmt ausgeformt sein, so dass das Rollenelement 10 aussen an einer Kreiszylinderfläche abrollen kann.

### BEZUGSZEICHENLISTE

- 1: Zentral körper
- 2: Rollenkörper
- 3: Rolle
- 4: Kettengliedplatte
- 5, 5': Gegenkörper, weiterer Gegenkörper
- 10: Rollenelement
- 12: geradliniger Abschnitt
- 13: Führungsnut
- 14: Lagernut
- 15: Bremsnase
- 16: innere Kante der Lagernut
- 17: Förderbahn
- 18: Führungssteg des Zentralkörpers
- 19: Führungsrille des Zentralkörpers
- 21: Umlaufbahn
- 22: Innenseite
- 23: Aussenseite
- 24: Laufband
- 28: Fütrungssteg des Laufbands
- 29: Führungsrille des Laufbands
- 31: Lagerachse
- 32: Rollfläche
- 33: Führungselement
- 34: Lagerzapfen
- 35: Lagerband
- 36: Nut an Rolle
- 37: innerer Rollendurchmesser
- 38: Zahnriemen
- 53: Führungselement
- 54: Führungssteg an Gegenkörper
- 55: Eingriffsöffnung
- 6: Antrieb
- 61: Antriebsnocke
- 62: Zahnrad
- 63: Antriebsachse
- 64: Verzahnung an Rolle
- 65: Verzahnung an Zentralkörper
- 66, 66': Verzahnung an Gegenkörper, an weiterem Gegenkörper
- 67: Steuerkurve, Kulisse
- 68: Antriebsband
- 69: Andruckrollen
- 7: Drehachse
- 71: Tragarm
- 72: Greifer
- 84: seitliche Distanzierungskörper
- 87: Mitnehmer
- 88: Einrastbereich
- 9: Käfigband

## Patentansprüche

1. **Antriebseinheit**, aufweisend ein angetriebenes Rollenelement (10), und einen starren Gegenkörper (5), wobei das Rollenellment angetrieben ist und einen Zentralkörper (1) sowie einen Rollenkörper (2) aufweist, wobei der Rollenkörper (2) auf einer nicht kreisförmigen Umlaufbahn um den Zentralkörper (1) verlaufend und bezüglich des Zentralkörpers (1) durch Abrollen von Rollen (3) des Rollenkörpers (2) an einer Innenseite des Rollenkörpers (2) um den Zentralkörper (1) herum bewegbar angeordnet ist, und die Rollen (3) an einer Aussenseite des Rollenkörpers (2) an einer Seite des Zentralkörpers (1) zum Abrollen am Gegenkörper (5) vorgesehen sind, wobei das Rollenelement (10) Antriebsmittel aufweist, welche am Rollenkörper (2) eingreifen und diesen bezüglich des Zentralkörpers (1) antreiben **dadurch gekennzeichnet, dass** der Rollenkörper (2) und der Gegenkörper (5) zueinander korrespondierend geformte und ineinandergreifende Mittel (64, 66; 37, 55; 87, 55) zur formschlüssigen Kraftübertragung aufweisen.

2. Antriebseinheit gemäss Anspruch 1, **dadurch gekennzeichnet, dass** die Rollen (3) im wesentlichen zylindrisch sind und eine Verzahnung (64) aufweisen, und die der Verzahnung (64) der Rollen (3) gegenüberliegenden Oberflächen am Gegenkörper (5) eine korrespondierende Verzahnung (66) aufweisen.

3. Antriebseinheit gemäss Anspruch 2, **dadurch gekennzeichnet, dass** auch die der Verzahnung (64) der Rollen (3) gegenüberliegenden Oberflächen am Zentralkörper (1) eine korrespondierende Verzahnung (65) aufweisen.

4. Antriebseinheit gemäss Anspruch 2, **dadurch gekennzeichnet, dass** die Rollen (3) eine Rollfläche (32) aufweisen, welche an einer nicht verzahnten Fläche des Gegenkörpers (5) abrollt.

5. Antriebseinheit gemäss Anspruch 4, **dadurch gekennzeichnet, dass** ein Durchmesser der Rollfläche (32) gleich dem Durchmesser des Wälzkreises der Verzahnung (64) der Rollen (3) ist.

6. Antriebseinheit gemäss Anspruch 1, **dadurch gekennzeichnet, dass** der Rollenkörper (2) radial vorstehende Mitnehmer (87) aufweist, welche zum Eingriff in Eingriffsöffnungen (55) des Gegenkörpers (5) vorgesehen sind.

7. Antriebseinheit gemäss einem der Ansprüche 1 bis 6, **dadurch gekennzeichnet, dass** die Rollen (3) an beiden Seiten in Achsrichtung in jeweils einem mitlaufenden seitlichen Distanzierungskörper (84) gelagert sind, und die seitlichen Distanzierungskörper (84) in Laufrichtung grösser als der Rollendurchmesser sind und verhindern dass aufeinanderfolgende Rollen (3) sich berühren, wobei die seitlichen Distanzierungskörper (84) nur ein Schieben aber kein Ziehen einer Folge von Rollen (3) erlauben.

8. Antriebseinheit gemäss Anspruch 6 und 7, **dadurch gekennzeichnet, dass** seitliche Distanzierungskörper (84) des Rollenkörpers (2) radial vorstehende Mitnehmer (87) aufweisen, welche zum Eingriff in Eingriffsöffnungen (55) des Gegenkörpers (5) vorgesehen sind.

9. Antriebseinheit gemäss einem der vorhergehenden Ansprüche, **dadurch gekennzeichnet, dass** die Rollen (3) einstückig und vorzugsweise aus Kunststoff geformt sind.

10. Antriebseinheit gemäss Anspruch 1, **dadurch gekennzeichnet, dass** der Gegenkörper (5) als Zahnstange ausgebildet ist, welche entlang ihrer linearen Hauptausdehnungsrichtung vertiefte Eingriffsöffnungen (55) zur Aufnahme der Rollen (3), insbesondere in einem Bereich von Nuten (36) der Rollen (3), aufweist, und wobei die Rollen (3) beim Abrollen des Rollenelements (10) am Gegenkörper (5) in die Eingriffsöffnungen (55) zu liegen kommen.

11. Antriebseinheit gemäss Anspruch 2 oder Anspruch 3, **dadurch gekennzeichnet, dass** der Gegenkörper (5) als Zahnstange ausgebildet ist, welche entlang ihrer linearen Hauptausdehnungsrichtung eine Verzahnung aufweist, welche mit der Verzahnung (64) der Rollen (3) korrespondiert und die Verzahnung (64) der Rollen (3) beim Abrollen des Rollenelements (10) am Gegenkörper (5) in die Verzahnung (66) des Gegenkörpers (5) eingreift.

12. Antriebseinheit gemäss Anspruch 8, **dadurch gekennzeichnet, dass** der Gegenkörper (5) als Zahnstange ausgebildet ist, welche entlang ihrer linearen Hauptausdehnungsrichtung vertiefte Eingriffsöffnungen (55) zur Aufnahme der Mitnehmer (87) der seitlichen Distanzierungskörper (84) aufweist, und wobei die Mitnehmer (87) beim Abrollen des Rollenelements (10) am Gegenkörper (5) in die Eingriffsöffnungen (55) eingreifen.

13. Antriebseinheit gemäss einem der Ansprüche 10 bis 12, **dadurch gekennzeichnet, dass** das es einen weiteren Gegenkörper (5') aufweist, welcher dem Gegenkörper (5) bezüglich des Rollenelements (10) gegenüberliegend angeordnet ist und welcher ebenfalls korrespondierend zum Rollenkörper (2) geformte und ineinandergreifende Mittel (64, 66; 37, 55; 87, 55) zur formschlüssigen Kraftübertragung auf das Rollenelement (10) aufweist.

## Claims

1. Driving unit comprising a driven roller element (10) and a rigid counter body (5), wherein the roller element is driven, and a central body (1) as well as a roller unit (2) wherein the roller unit (2) is arranged in a manner extending on a non-circular continuous track around the central body (1) and movable around the central body (1) through the rolling-off of rollers (3) of the roller unit (2) on an internal side of the roller unit (2), and the rollers (3) on an external side of the roller unit (2) on one side of the central body (1), being provided for rolling-off on the rigid counter body (5), wherein the roller element (10) comprises drive means, which engage in the roller unit (2) and drive it relative to the central body (1), **characterised in that** the roller unit (2) and the counter body (5) comprise means (64, 66; 37, 55; 87, 55) shaped corresponding to each other and meshing together for the positive interlocking force transmission

2. Driving unit according to claim 1, **characterised in that** the rollers (3) arc essentially cylindrical and comprise a toothing (64), and the surfaces on the counter body (5) opposite the toothing (64) of the rollers (3) comprise a corresponding toothing (66).

3. Driving unit according to claim 2, **characterised in that** also the surfaces on the central body (1) opposite the toothing (64) of the rollers (3) comprise a corresponding toothing (65).

4. Driving unit according to claim 2, **characterised in that** the rollers (3) comprise a rolling surface (32), which rolls off on a non-toothed surface of the counter body.

5. Driving unit according to claim 4, **characterised in that** a diameter of the rolling surface (32) is the same as the pitch circle diameter of the toothing (64) of the rollers (3).

6. Driving unit according to claim 1, **characterised in that** the roller unit (2) comprises radially protruding tappets (87), which are provided for the engaging in engagement openings (55) of the counter body (5).

7. Driving unit according to any one of claims 1 to 6, **characterised in that** the rollers (3) on both sides in axial direction arc respectively supported in a lateral spacer body (84) moving along with it, and the lateral spacer bodies (84) in the moving direction arc larger than the roller diameter and prevent that successive rollers (3) come into contact with one another, wherein the lateral spacer bodies (84) permit a pushing only but not a pulling of a succession ofrollers (3).

8. Driving unit according to claims 6 and 7, **characterised in that** the lateral spacer body (84) of the roller unit (2) comprises radially protruding tappets (87) which are provided for engaging in engagement openings (55) of the counter body (5).

9. Driving unit according to any one of the preceding claims, **characterised in that** the rollers (3) are formed as a single part and in preference out of plastic material.

10. Driving unit according to claim 1, **characterised in that** the counter body (5) is designed as a rack, which along its main direction of expanse comprises deepened engagement openings (55) for receiving the rollers (3), in particular in a section of grooves (36) of the rollers (3), and wherein the rollers (3) during the rolling-off of the roller element (10) on the counter body (5) come to lie in the engagement openings (55).

11. Driving unit according to claims 2 or 3, **characterised in that** the counter body (5) is designed as a rack, which along its linear main direction of expanse comprises a toothing, which corresponds to the toothing (64) of the rollers (3) and the toothing (64) of the rollers (3) during the rolling-off of the roller element (10) on the counter body (5) engages toothing (66) of the counter body (5).

12. Driving unit according to claim 8, **characterised in that** the counter body (5) is designed as a rack, which along its linear main direction of expanse comprises deepened engagement openings (55) for receiving the tappets (87) of the lateral spacer bodies (84), and wherein the tappets (87) during the rolling-off of the roller element (10) on the counter body (5) engage in the engagement openings (55).

13. Driving unit according to any one of claims 10 to 12, **characterised in that** it comprises a further counter body (5'), which is arranged opposite the counter body (5) with regard to the roller element (10) and which also comprises means (64, 66; 37, 55; 87, 55) shaped corresponding to the roller unit (2) and meshing for the positive interlocking force transmission on to the roller element (10).

## Revendications

1. Unité d'entraînement, qui présente un élément à rouleaux entraîné (10) et un corps opposé rigide (5), dans laquelle l'élément à rouleaux est entraîné et présente un corps central (1) ainsi qu'un corps à rouleaux (2) et dans laquelle le corps à rouleaux (2) est agencé avec faculté de déplacement autour du corps central (1) sur une trajectoire de révolution qui n'est pas en forme de cercle et qui s'étend autour du corps central (1) et, par rapport au corps central (1), par le roulement des rouleaux (3) du corps à rouleaux (2) sur une face intérieure du corps à rouleaux (2) et dans laquelle les rouleaux (3) sont prévus sur un côté extérieur du corps à rouleaux (2) sur un côté du corps central (1) pour le roulement sur le corps opposé (5) et dans laquelle l'élément à rouleaux (10) présente des moyens d'entraînement qui viennent s'engager sur le corps à rouleaux (2) et qui entraînent celui-ci par rapport au corps central (1), **caractérisée en ce que** le corps à rouleaux (2) et le corps opposé (5) présentent des moyens (64, 66 ; 37, 55 ; 87, 55) qui sont formés de manière correspondante les uns avec les autres et qui viennent s'engager les uns par rapport aux autres pour la transmission de force par coopérations de formes.

2. Unité d'entraînement conformément à la revendication 1, **caractérisée en ce que** les rouleaux (3) sont essentiellement cylindriques et présentent une denture (64) et **en ce que** la denture (64) des rouleaux (3) des surfaces placées les unes en face des autres sur le corps opposé (5) présente une denture correspondante (66).

3. Unité d'entraînement conformément à la revendication 2, **caractérisée en ce que** les surfaces placées les unes en face des autres de la denture (64) des rouleaux (3) présentent aussi une denture correspondante (65) sur le corps central (1).

4. Unité d'entraînement conformément à la revendication 2, **caractérisée en ce que** les rouleaux (3) présentent une surface de roulement (32) qui roule sur une surface non dentée du corps opposé (5).

5. Unité d'entraînement conformément à la revendication 4, **caractérisée en ce qu'**un diamètre de la surface de roulement (32) est identique au diamètre du cercle primitif de la denture (64) des rouleaux (3).

6. Unité d'entraînement conformément à la revendication 1, **caractérisée en ce que** le corps à rouleaux (2) présente des tenons d'entraînement (87) qui sont radialement en saillie et qui sont prévus pour venir s'engager jusque dans des ouvertures d'engagement (55) du corps opposé (5).

7. Unité d'entraînement conformément à l'une des revendications 1 à 6, **caractérisée en ce que** les rouleaux (3) sont montés sur les deux côtés dans la direction d'axe et respectivement dans un corps de distance latéral (84) qui se déplace avec le rouleau et **en ce que** les corps de distance latéraux (84) sont dans le sens de marche plus grands que le diamètre de rouleau et empêchent que des rouleaux consécutifs (3) se contactent et dans laquelle les corps de distance latéraux (84) permettent seulement une poussée et non une tirée d'une séquence de rouleaux (3).

8. Unité d'entraînement conformément à l'une ou l'autre des revendications 6 et 7, **caractérisée en ce que** les corps de distance latéraux (84) du corps à rouleaux (2) présentent des tenons d'entraînement (87) qui sont radialement en saillie et qui sont prévus pour venir s'engager jusque dans des ouvertures d'engagement (55) du corps opposé (5).

9. Unité d'entraînement conformément à l'une des revendications précédentes, **caractérisée en ce que** les rouleaux (3) sont formés en un seul tenant et sont constitués de préférence de matière plastique.

10. Unité d'entraînement conformément à la revendication 1, **caractérisée en ce que** le corps opposé (5) est réalisé comme une crémaillère qui présente le long de sa direction d'élongation principale linéaire des ouvertures d'engagement en profondeur (55) afin de réceptionner les rouleaux (3), en particulier dans une zone de rainures (36) des rouleaux (3) et dans laquelle les rouleaux (3) viennent s'appliquer jusque dans les ouvertures d'engagement (55) pendant le roulement de l'élément à rouleaux (10) sur le corps opposé (5).

11. Unité d'entraînement conformément à la revendication 1 ou à la revendication 3, **caractérisée en ce que** le corps opposé (5) est réalisé comme une crémaillère qui présente une denture le long de sa direction d'élongation principale linéaire, laquelle correspond avec la denture (64) des rouleaux (3) et dans laquelle la denture (64) des rouleaux (3) vient s'engager jusque dans la denture (66) du corps opposé (5) lors du roulement de l'élément à rouleaux (10) sur le corps opposé (5).

12. Unité d'entraînement conformément à la revendication 8, **caractérisée en ce que** le corps opposé (5) est réalisé comme une crémaillère qui présente des ouvertures d'engagement en profondeur (55) le long de sa direction d'élongation principale linéaire pour la réception des tenons d'entraînement (87) des corps de distance latéraux (84) et dans laquelle les tenons d'entraînement (87) viennent s'engager jusque dans les ouvertures d'engagement (55) lors du roulement de l'élément à rouleaux (10) sur le corps opposé (5).

13. unit d'entraînement conformément à l'une des revendications 10 à 12, **caractérisée en ce qu'**elle présente un autre corps opposé (5') qui est agencé en face du corps opposé (5) par rapport à l'élément à rouleaux (10) et lequel présente également des moyens (64, 66 ; 37, 55 ; 87, 55) qui sont formés de manière correspondante au corps à rouleaux (2) et qui viennent s'engager les uns dans les autres pour la transmission de force par coopération de formes sur l'élément à rouleaux (10).
